# EUROPÄISCHE PATENTSCHRIFT

(11) **EP 0 395 624 B1**
(45) Veröffentlichungstag und Bekanntmachung des Hinweises auf die Patenterteilung: **25.08.1993**
(21) Anmeldenummer: 90890092.1
(22) Anmeldetag: 29.03.1990
(51) Int. Cl.: A01D 34/73, A01D 43/08

(54) **Mäh- und Häckselmaschine**
Mowing and chopping machine
Machine à faucher et hacher

(30) Priorität: 28.04.1989 AT 1026/89
(43) Veröffentlichungstag der Anmeldung: 31.10.1990
(73) Patentinhaber: Jetzinger, Franz, A-3364 Neuhofen a.d. Ybbs (AT)
(72) Erfinder: Jetzinger, Franz, A-3364 Neuhofen a.d. Ybbs (AT)
(74) Vertreter: Hübscher, Heiner, Dipl.-Ing.

(56) Entgegenhaltungen:
- EP-A- 0 022 588
- DE-A- 2 114 267
- DE-A- 2 612 381
- DE-C- 2 920 244
- US-A- 4 241 568

## Beschreibung

Die Erfindung betrifft eine Mäh- bzw. Häckselmaschine mit wenigstens einem rotierenden Werkzeugträger, an dem die Werkzeuge um zur Rotationsachse des Werkzeugträgers parallele, in je einem Langloch radial verschiebbare Bolzen schwenkbar befestigt sind.

Durch die schwenkbare Lagerung der Werkzeuge können diese beim Auftreffen auf einen harten Gegenstand, beispielsweise einen Stein, ausweichen und werden so vor größeren Beschädigungen bewahrt. Bisher sind die Bolzen, um die die Werkzeuge schwenken, meist mit dem Werkzeugträger fest verschraubt, so daß das Lösen der Bolzen zum Werkzeugaustausch und das nachfolgende neuerliche Festziehen nicht nur einen Schraubenschlüssel oder ein sonstiges geeignetes Werkzeug erfordert, sondern auch entsprechende Mühe bereitet, wenn man bedenkt, daß im rauhen Betrieb in der Landwirtschaft immer mit Verklemmungen und Verschmutzungen zu rechnen ist. Bei den Maschinenwerkzeugen handelt es sich in der Regel um Messer verschiedener Form, es wäre aber auch möglich, den Werkzeugträger mit gegebenenfalls schneidenden Windflügeln auszustatten und ihn einem zweiten mit Messern bestückten Werkzeugträger vorzuordnen, um das auf der Erde liegende Erntegut hochzusaugen und vorzuschneiden.

Es ist zwar bereits eine Messerbefestigung an einem Schneidwerk bekannt (DE-OS 24 48 130), bei dem der Messerträger aus zwei dünnen Scheiben besteht, von denen die eine mit fix befestigten Bolzen für die Messer versehen ist, wobei aber die beiden Scheiben mit der Hand auseinander gespreizt werden müssen, um die Messer auf die Bolzen aufstecken zu können, die dann in Löcher der Gegenscheibe einrasten. Ein Werkzeug wird hiefür nicht benötigt, doch muß es sich um ganz dünne, entsprechend biegsame Scheiben als Werkzeugträger und auch um sehr dünne Messerklingen handeln, wenn die Montage überhaupt möglich sein soll. Für Mäh- und Häckselmaschinen schwererer Bauart, wie sie in der allgemeinen Landwirtschaft benötigt werden, ist diese Konstruktion selbstverständlich nicht geeignet.

Es ist auch schon eine Mähvorrichtung bekannt (DE-OS 32 45 617), bei der die Bolzen, auf denen die Messer schwenkbar gelagert sind, durch Federkraft in ihrem Sitz im Messerträger gehalten werden. Zum Lösen bzw. Auswechseln der Messer muß dann jeweils entweder eine Blattfeder aus ihrer Verankerung gezogen oder der Bolzen entgegen der Kraft einer Schraubenfeder so weit axial verschoben werden, daß das Messer frei wird. Daraus ergibt sich eine verhältnismäßig komplizierte und dementsprechend teure Konstruktion, die überdies den Nachteil hat, daß nur vergleichsweise dünne Einfachmesser und nicht zwei oder mehrere Messer auf einem Bolzen gelagert werden können, weil sonst der Federweg zu groß wäre.

Schließlich sind bei einer anderen bekannten Ausführung (DE-C2 29 20 244) an einem als Schneidteller ausgebildeten Werkzeugträger unterseitig Blattfedern befestigt, die je ein Langloch, das sich zur Rotationsachse hin weitet, zur Halterung eines Schwenkbolzens für das Messer aufweisen, wobei der Schwenkbolzen am erweiterten Teil des Langloches eingeführt und dann zum schmäleren Teil hin radial verschoben wird, wo die Lochränder in eine Bolzeneinschnürung eingreifen und ihn so festhalten. Zur Sicherung des Bolzens in dieser Stellung dient eine eigene einen Bolzenbund passend umfassende Platte, die an der Blattfeder angenietet wird, so daß ein Bolzenwechsel Schwierigkeiten bereitet bzw. kaum mehr möglich ist. Das Messer wird auf den Bolzen lediglich von oben aufgesteckt und eine Axialverschiebung des Messers auf dem Bolzen dadurch verhindert, daß die Blattfeder das Messer von unten gegen den Schneidteller drückt. Abgesehen davon, daß hier auch ein beträchtlicher technischer Aufwand erforderlich ist, kann ein Messerwechsel nicht ohne Werkzeug erfolgen, da ja die Blattfeder vom Schneidteller mit ziemlicher Kraft weggedrückt werden muß, um das Messer abnehmen bzw. auswechseln zu können.

Demnach liegt der Erfindung die Aufgabe zugrunde, diese Mängel zu beseitigen und eine Mäh- bzw. Häckselmaschine der eingangs geschilderten Art zu schaffen, bei der die Werkzeuge ohne Hilfsgerät einfach gelöst bzw. montiert werden können, sich eine robuste Konstruktion ergibt und harte Schläge auf den Werkzeugträger bzw. seine Welle weitgehend vermieden werden.

Die Erfindung löst die gestellte Aufgabe dadurch, daß die jeweils wenigstens ein Werkzeug tragenden Bolzen mit ihren Enden in den radial zur Rotationsachse gerichteten Langlöchern von jeweils zwei einander gegenüberliegenden, entweder den Werkzeugträger selbst bildenden Scheiben oder am Werkzeugträger befestigten, etwa radial abstehenden Laschen lose gelagert sind und der radial äußere Abschnitt der Langlöcher eine eine Axialverschiebung des Bolzens verhindernde Abdeckung aufweist.

Die Bolzen lassen sich selbstverständlich in den Langlöchern verschieben, d. h. sie nehmen unter der Wirkung der Fliegkraft der Werkzeuge naturgemäß die Stellung am radial äußeren Ende der Langlöcher ein, wo diese aber abgedeckt sind, so daß die Bolzen nicht in ihrer Achsrichtung aus den Langlöchern austreten können. Zum Lösen der Bolzen brauchen sie bzw. die Werkzeuge bei stehenden Werkzeugträgern nur zum radial inneren Ende der Langlöcher verschoben zu werden, wo die Langlochabdeckung fehlt, so daß die Bolzen dort ausgestoßen werden können. Das Abnehmen oder Einsetzen der Werkzeuge, ob es sich nun um Messer, Schlegel oder Windflügel handelt, ist also ohne Hilfsgerät einfach durchführbar, wobei es sich um eine einfache und robuste Konstruktion handelt, da es ja nur gilt, jeweils entsprechende Langlöcher mit Abdeckungen vorzusehen.

In weiterer Ausbildung der Erfindung weisen bei übereinander angeordneten Scheiben oder Laschen die Langlöcher in der jeweils unteren Scheibe bzw. unteren Lasche eine Abdeckung auf, die am radial inneren Langlochende nur eine kleinere Öffnung als der Bolzenquerschnitt freiläßt. Dadurch wird verhindert, daß bei stehender Maschine und zufällig einwärts geschobenem Werkzeug der Bolzen am radial inneren Langlochende nach unten durchfällt.

Handelt es sich dagegen um eine Maschine mit liegender Rotationsachse des Werkzeugträgers, so ist jeweils eine zwischen die Scheiben oder Laschen in den radial inneren Langlochbereich vorragende zurückdrückbare Feder vorgesehen.

Durch diese Feder wird verhindert, daß der Bolzen ohne besondere äußere Kraftanwendung in die Stellung am radial inneren Langlochende gelangt, in der er sich seitlich ausschieben könnte.
Erfindungsgemäß sind die Langlöcher durch jeweils beidseitig von ihrem radial äußeren Ende ausgehende Schrägflanken etwa herzförmig erweitert. Kommt es während der Arbeit zu einem stärkeren Schlag auf das Messer, so kann sich der Bolzen an der einen oder anderen Schrägflanke abwälzen, und es wird daher eine Dämpfung erzielt, durch sich eine Weiterleitung des Schlages auf den Werkzeugträger weitgehend verringert.

Die Schlagdämpfung kann noch weiter verstärkt bzw. die Weiterleitung auf die übrigen Maschinenteile vermindert werden, wenn die beiden jeweils einem Werkzeug zugeordneten Laschen zu einer Einheit verbunden sind, die für sich am Werkzeugträger in bezug auf seine Rotationsachse mit Radialspiel und gegebenenfalls mit Spiel in Umfangsrichtung um eine zur Rotationsachse annähernd parallele Achse schwenkbar gelagert ist. Es ergibt sich also eine zusätzlich gelenkige Unterteilung zwischen Werkzeug und Werkzeugträger und damit die gewünschte verstärkte Dämpfung der Schlagleiterleitung.

In der Zeichnung ist der Erfindungsgegenstand in mehreren Ausführungsbeispielen dargestellt. Es zeigen:
- Fig. 1: einen liegenden scheibenförmigen Werkzeugträger mit daran befestigten Messern in Draufsicht,
- Fig. 2: einen zugehörigen Vertikalschnitt nach der Linie II-II der Fig. 1,
- Fig. 3: eine Ausführung mit herzförmig erweitertem Langloch in Draufsicht bei abgenommener oberer Scheibe des Werkzeugträgers,
- Fig. 4: einen Teil eines um eine horizontale Achse drehbaren Werkzeugträgers in Draufsicht,
- Fig. 5: die Konstruktion nach Fig. 4 im Schaubild, wobei das Werkzeug weggelassen ist,
- Fig. 6: eine weitere mögliche Ausführungsform mit liegendem Werkzeugträger in Draufsicht und
- Fig 7: im Schnitt nach der Linie VII-VII der Fig. 6.

Auf einer angetriebenen vertikalen Welle 1 ist ein Werkzeugträger befestigt, der aus zwei Scheiben 2, 3 besteht. Die Scheiben 2, 3 weisen einander gegenüberliegende, radial zur Welle 1 gerichtete Langlöcher 4 auf, in denen zwei Werkzeuge 5 tragende Bolzen 6 mit ihren Enden lose gelagert sind. Die Werkzeuge bzw. Messer 5 können um die Bolzen 6 frei schwenken und die Bolzen 6 sind in den Langlöchern 4 in deren Längsrichtung verschiebbar. Die radial äußeren Abschnitte der Langlöcher 4 sind durch an den Scheiben 2, 3 angeschweißte Bleche 7, 8 abgedeckt, so daß die Bolzen 6 in ihrer dargestellten, durch die Fliehkraft bedingten Lage nicht aus den Langlöchern 4 austreten können. Das untere Abdeckblech 8 läßt am radial inneren Langlochende nur eine Öffnung frei, die kleiner als der Bolzenquerschnitt ist. Daher kann bei einwärts gedrückten Werkzeugen bzw. Messern 5 der Bolzen 6 nicht nach unten durchfallen. Es ist aber möglich, ihn durch die verbliebene Öffnung des Langloches 4 der unteren Scheibe 3 nach oben auszustoßen, um die Messer bzw. Werkzeuge 5 abnehmen bzw. auswechseln zu können. Die Montage der Werkzeuge bzw. Messer 5 erfolgt naturgemäß in der Weise, daß die Werkzeuge 5 so weit zwischen die Scheiben 2 und 3 eingeschoben werden, daß die Bohrungen der Messer mit den radial inneren Langlochenden fluchten, worauf die Bolzen 6 von oben eingesteckt werden.

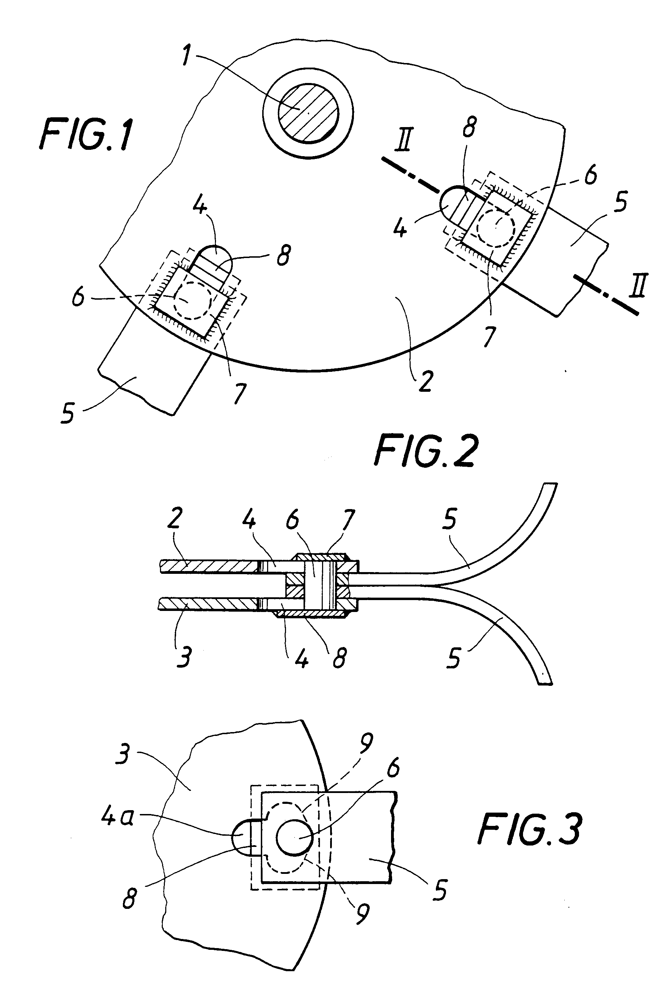

Bei der Ausbildung nach Fig. 3 ist das Langloch 4a durch jeweils beidseitig von seinem radial äußeren Ende ausgehende Schrägflanken 9 etwa herzförmig erweitert, so daß das Werkzeug 5 bzw. der Bolzen 6 bei einem harten Aufschlag entlang der Schrägflächen 9 auswandern und dadurch den Schlag auf die übrigen Konstruktionsteile mildern kann.

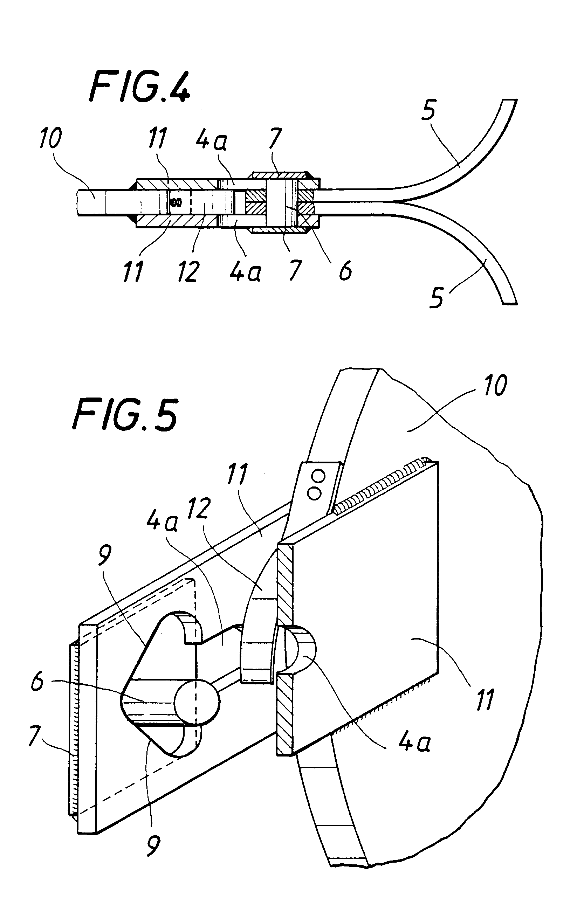

Gemäß den Fig. 4 und 5 ist als Werkzeugträger eine Scheibe 10 mit liegender Rotationsachse vorgesehen. An der Scheibe 10 sind jeweils zwei einander gegenüberliegende, radial abstehende Laschen 11 angeschweißt, in denen die herzförmig erweiterten Langlöcher 4a für den Lagerbolzen 6 der Werkzeuge 5 ausgespart sind. In diesem Fall sind zwei gleichgroße Abdeckbleche 7 vorgesehen, wobei die Gefahr des unbeabsichtigten seitlichen Austretens des Bolzens 6 am radial inneren Langlochende dadurch verhindert wird, daß jeweils eine zwischen die Laschen 11 in den radial inneren Langlochbereich vorragende Blattfeder 12 vorgesehen ist, die bei der Demontage leicht aus dem Langlochbereich zurückgedrückt werden kann.

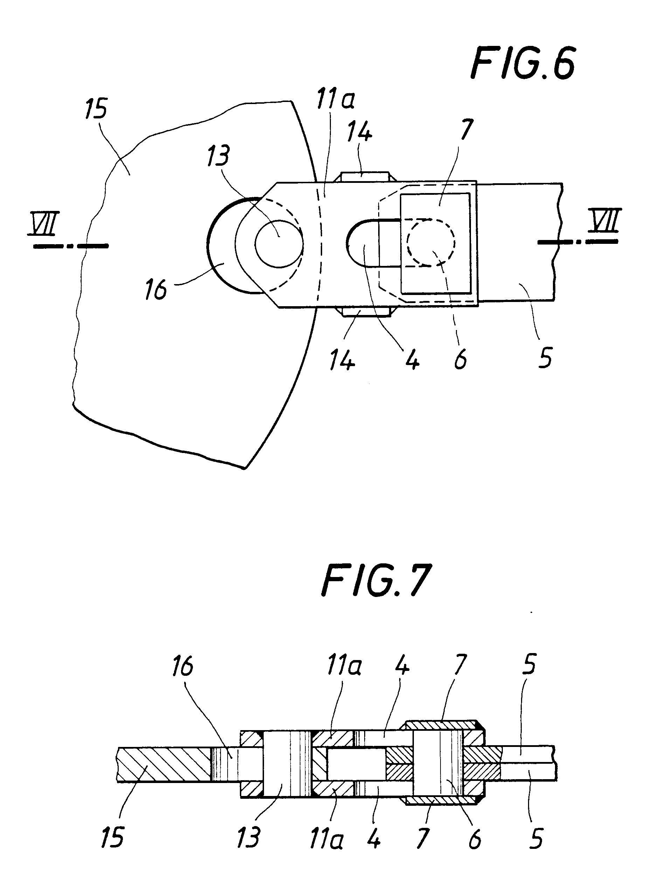

Die Fig. 6 und 7 zeigen eine Ausbildung, bei der die Laschen 11a einerseits durch einen eingeschweißten Zapfen 13, anderseits durch zwei Seitenstege 14 zu einer Einheit verbunden sind, die für sich an dem von einer waagrechten Scheibe 15 gebildeten Werkzeugträger um eine zur Rotationsachse annähernd parallele Achse, nämlich den Zapfen 13, schwenkbar gelagert sind. Dabei hat der Zapfen 13 in einem entsprechenden Loch 16 des Werkzeugträgers 15 in bezug auf die Rotationsachse Radialspiel und Spiel in Umfangsrichtung. Auch in diesem Fall braucht das untere Abdeckblech 7 das radial innere Ende des Langloches 4 nicht einzuengen, weil sich bei einem Verschieben der Messer 5 radial einwärts auch die Laschen 11a zufolge des Spiels des Zapfens 13 im Loch 16 mitverschieben und dann die Werkzeuge 5 am Rand der Scheibe 15 bzw. des Werkzeugträgers anstoßen bevor noch der Zapfen 6 voll zum Ende der Langlöcher 4 gelangen kann.

## Patentansprüche

1. Mäh- bzw. Häckselmaschine mit wenigstens einem rotierenden Werkzeugträger (2, 3; 10; 15), an dem die Werkzeuge (5) um zur Rotationsachse (1) des Werkzeugträgers (2, 3; 10; 15) parallele, in je einem Langloch (4, 4a) radial verschiebbare Bolzen (6) schwenkbar befestigt sind, dadurch gekennzeichnet, daß die jeweils wenigstens ein Werkzeug (5) tragenden Bolzen (6) mit ihren Enden in radial zur Rotationsachse (1) gerichteten Langlöchern (4; 4a) von jeweils zwei einander gegenüberliegenden, entweder den Werkzeugträger selbst bildenden Scheiben (2, 3) oder am Werkzeugträger (10; 15) befestigten, etwa radial abstehenden Laschen (11; 11a) lose gelagert sind und der radial äußere Abschnitt der Langlöcher (4; 4a) eine eine Axialverschiebung des Bolzens (6) verhindernde Abdeckung (7, 8) aufweist.

2. Maschine nach Anspruch 1, dadurch gekennzeichnet, daß bei übereinander angeordneten Scheiben (2, 3) oder Laschen die Langlöcher (4) in der jeweils unteren Scheibe (3) bzw. unteren Lasche eine Abdeckung (8) aufweisen, die am radial inneren Langlochende nur eine kleinere Öffnung als der Bolzenquerschnitt freiläßt.

3. Maschine nach Anspruch 1, dadurch gekennzeichnet, daß bei liegender Rotationsachse des Werkzeugträgers (10) jeweils eine zwischen die Scheiben oder Laschen (11) in den radial inneren Langlochbereich vorragende, zurückdrückbare Feder (12) vorgesehen ist.

4. Maschine nach einem der Ansprüche 1 - 3, dadurch gekennzeichnet, daß die Langlöcher (4a) durch jeweils beidseitig von ihrem radial äußeren Ende ausgehende Schrägflanken (9) etwa herzförmig erweitert sind.

5. Maschine nach einem der Ansprüche 1, 2 und 4, dadurch gekennzeichnet, daß die beiden jeweils einem Werkzeug (5) zugeordneten Laschen (11a) zu einer Einheit verbunden sind, die für sich am Werkzeugträger (15) in bezug auf seine Rotationsachse mit Radialspiel und gegebenenfalls mit Spiel in Umfangsrichtung um eine zur Rotationsachse annähernd achsparallele Achse (13) schwenkbar gelagert ist.

## Claims

1. A mower or straw-cutter comprising at least one rotating tool-holder (2, 3; 10; 15) to which the tools (5) are secured so as to be pivotable on pins (6), each radially movable in a slot (4, 4a) and parallel to the axis of rotation (1) of the tool-holder (2, 3; 10; 15), characterised in that the ends of the pins (6), each of which bears at least one tool (5), are loosely mounted in slots (4; 4a) extending radially relative to the axis (1) of rotation and in pairs of facing discs (2, 3) either forming the tool-holder themselves or on plates (11; 11a) secured to the tool-holder (10; 15) and projecting approximately radially, and the radial outer portions of the slots (4; 4a) have a cover (7, 8) preventing axial displacement of the pin (6).

2. A machine according to claim 1, characterised in that in the case of superposed discs (2, 3) or plates, the slots (4) in the bottom disc (3) or bottom plate have a cover (8) which, at the radially inner end of the slot, leaves an opening which is smaller than the pin cross-section.

3. A machine according to claim 1, characterised in that when the axis of rotation of the tool-holder (10) is horizontal, a spring (12) capable of being pushed back is provided between the discs or plates (11) and projects into the radially inner region of the slot.

4. A machine according to any of claims 1 to 3, characterised in that the slots (4a) are widened into an approximately heart shape by sloping flanks (9) extending from their radially outer end on each side.

5. Maschine according to any of claims 1, 2 and 4, characterised in that each pair of plates (11a) associated with a tool (5) are joined into a unit which is independently mounted on the tool-holder (15) so as to be pivotable relative to its axis of rotation with radial clearance and optionally with circomferential clearance around an axis approximately parallel to the axis of rotation.

## Revendications

1. Moissonneuse hacheuse, avec au moins un porte-outil (2, 3; 10; 15) rotatif, sur lequel les outils (5) sont fixés, de façon à pouvoir pivoter autour de tourillons (6), qui sont parallèles à l'axe de rotation (1) du porte-outil (2, 3; 10; 15), et sont chacun déplaçable radialement dans un trou oblong (4, 4a),
caractérisée en ce que les tourillons (6), portant chacun au moins un outil (5), sont montés à rotation de façon lâche, par leurs extrémités, dans des trous oblongs (4; 4a) orientés radialement par rapport à l'axe de rotation (1), ménagés dans des disques (2, 3), allant par paires et placés l'un en regard de l'autre, formant le porte-outil (10; 15) même, ou sur des pattes (11; 11a) faisant saillie à peu près radialement, fixées sur le porte-outil (10; 15), et le tronçon radialement extérieur des trous oblongs (4; 4a) présentant un recouvrement (7, 8) empêchant tout déplacement axial du tourillon (6).

2. Moissonneuse hacheuse selon la revendication 1,
caractérisé en ce que, dans le cas de deux disques (2, 3) placés l'un au-dessus de l'autre ou de pattes, les trous oblongs (4) présentent, dans le disque (3) de dessous ou la patte de dessous, un recouvrement (8) ne laissant libre sur l'extrémité de trou oblong radialement intérieur qu'une ouverture plus petite que la section transversale du tourillon.

3. Moissonneuse hacheuse selon la revendication 1,
caractérisée en ce que, dans le cas où l'axe de rotation du porte-outil (10) est horizontal, est chaque fois prévu un ressort (12), pouvant être rappelé par compression, pénétrant chaque fois entre les disques ou pattes (1), dans la zone de trou oblong radialement intérieure.

4. Moissonneuse hacheuse selon l'une des revendications 1 à 3,
caractérisé en ce que les trous oblongs (4a) sont agrandis à peu près en forme de coeur, chaque fois par des flancs inclinés (9) partant des deux côtés de leur extrémité radialement extérieure.

5. Moissonneuse hacheuse selon l'une des revendications 1, 2 et 4,
caractérisé en ce que les deux pattes (11a) associées à un outil (5) sont reliées pour former un ensemble, monté à rotation de façon à pouvoir pivoter pour soi sur le porte-outil (15), par rapport à son axe de rotation, avec un jeu radial et, le cas échéant, avec un jeu en direction circonférentiel. autour d'un axe (13) à peu près parallèle à l'axe de rotation.
